Europäisches Patentamt

(19) European Patent Office

Office européen des brevets

(11) Publication number: **0 110 737**
**B1**

(12) **EUROPEAN PATENT SPECIFICATION**

(45) Date of publication of patent specification: **11.03.87**

(51) Int. Cl.⁴: **H 02 G 15/10, H 02 G 15/115**

(21) Application number: **83401910.1**

(22) Date of filing: **29.09.83**

(54) Joint box for directly buried cable and cable joint comprising same.

(30) Priority: **29.09.82 JP 172373/82**
**29.09.82 JP 148383/82 u**

(43) Date of publication of application:
**13.06.84 Bulletin 84/24**

(45) Publication of the grant of the patent:
**11.03.87 Bulletin 87/11**

(84) Designated Contracting States:
**GB**

(56) References cited:
**DE-A-1 765 490**
**DE-A-2 109 793**

(73) Proprietor: **Mitsubishi Cable Industries, Ltd.**
**8, Nishino-cho Higashimukaijima Amagasaki-shi**
**Hyogo-ken 660 (JP)**

(72) Inventor: **Itho, Hirotaka**
**24-1-613, Shin-Ashiyakami**
**Suita-shi, 565 (JP)**
Inventor: **Ijiri, Yasuo**
**1-5-405, Nishidai**
**Itami-shi, 664 (JP)**
Inventor: **Kurita, Minoru**
**4-15, Hacchonawate-cho**
**Takatsuki-shi, 569 (JP)**
Inventor: **Watanabe, Takashi**
**6-4, Tozaki-cho**
**Nishinomiya-shi, 663 (JP)**

(74) Representative: **Doan, Dinh-Nam et al**
**Cabinet BEAU DE LOMENIE**
**55, rue d'Amsterdam**
**F-75008 Paris (FR)**

# Description

## Technical Field

The present invention relates to a novel joint box for electric cables, such as power cables and communication cables, to be directly buried underground, and to a cable joint comprising such joint boxes.

## Background Art

Joint boxes of copper are usually used for electric cables which are to be directly buried underground. Although having relatively high corrosion resistance, copper becomes progressively corroded with time when held in direct contact with soil or sand containing water, so that the cable joint constructed with use of such copper joint boxes is entirely housed in a protective casing which is generally called a coffin and which is filled with asphalt to prevent water from permeating into the casing.

Coffins of different sizes are used for electric cables of different sizes. Small coffins are about 0.3 m in diameter and about 1 m in length, while some coffins are as large as about 0.7 m in diameter and about 3 m in length. Accordingly, when installing cables, there is the necessity of excavating at the location of every cable joint a cavity which is large enough for burying a coffin of such a large size. The installation of cables therefore involves the problem of requiring much labor. Furthermore, there is the drawback that at the site of cable installation, it is necessary to prepare a large amount of asphalt and an apparatus for filling asphalt into the interior space of the coffin.

German patent application 2 109 793 described a muff for oil cables comprising:
— a main body of metal
— an anodic protecting layer containing an electro-negative metal powder and a synthetic resin, formed over said main body,
— and an anticorrosion protecting layer formed over the said anodic protecting layer and containing a synthetic resin and a filler material.

But hydrophobic, water impervious materials are not suggested for use as the material for the intermediate protecting layer.

## Summary of the Invention

An object of the present invention is to provide a novel joint box for directly buried cables without necessitating any coffin for protection.

Another object of the invention is to provide a cable joint which is constructed with use of such novel joint boxes.

The novel joint box comprises a main body of metal, an intermediate anticorrosion layer and a plastic protective layer; said anticorrosion layer is in intimate contact with the main body and the plastic protective layer, as adhered or bonded thereto, so as not to trap any water in the interfaces; the novel joint box is characterized in that said anticorrosion layer is made of a hydrophobic, water-impervious material selected from a group consisting of asphalt, unvulcanized natural or synthetic rubber, grease, petrolatum, water-impervious jelly-like materials usually used for water-impervious cables, wax, or a mixture of at least two of these, or a vulcanised or semi-vulcanised self-bonding rubber tape.

More particularly, the anticorrosion layer is made of a tacky and flexible material.

Preferably, the plastic protective layer is made of a crosslinked or cured plastics reinforced with a fiber material incorporated therein.

Another object of the invention is a joint for directly buried electric cables characterized in that said joint comprises a pair of joint boxes each having an anticorrosion layer on its outer surface and a plastic protective layer over the anticorrosion layer, the outer end and each of the joint boxes being soldered to the metal sheath of an electric cable and protected against corrosion by a protective layer made of an anticorrosion material and formed over the soldered joint, the joint boxes being connected to each other by a flange joint accommodated in an anticorrosion case provided on trunk portions of the joint boxes, the remaining interior space of the anticorrosion case being filled with an anticorrosion material.

## Brief Description of the Drawings

Fig. 1 is a sectional view of an embodiment of joint box (to show only upper half thereof above the center line); and

Fig. 2 is a sectional view of an OF cable joint comprising joint boxes according to the embodiment of Fig. 1.

## Detailed Description of the Invention

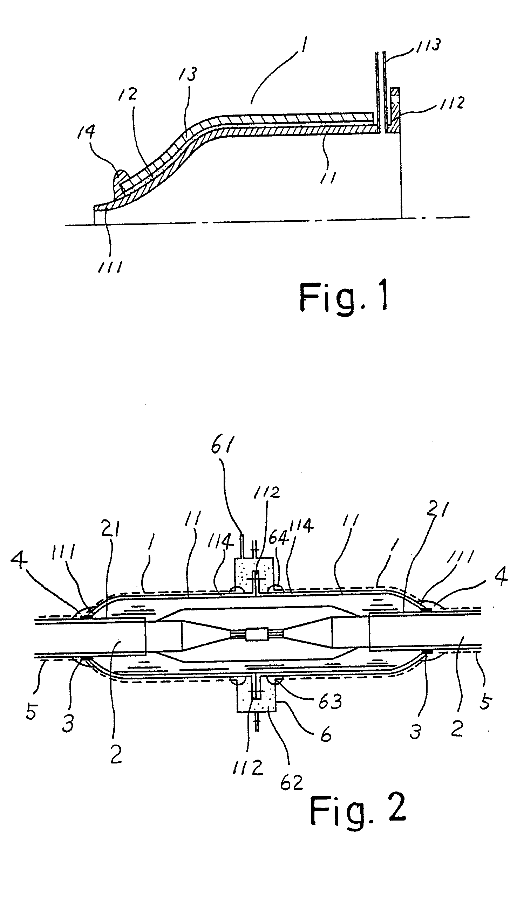

With reference to Fig. 1, a joint box 1 for a directly buried cable comprises a main body 11 made of copper, aluminum or like metal having high conductivity and good mechanical properties, especially copper, an anticorrosion layer 12 formed over the main body 11, and a plastic protective layer 13 formed over the layer 12. The joint box main body 11 may be the same as a joint box conventionally used. Accordingly the joint box of the present invention can be prepared, for example, by covering the outer surface of such a known joint box with the anticorrosion layer 12 and the plastic protective layer 13 which are made of some of the materials to be described below.

Our research has revealed that when water is trapped at the interface between the plastic protective layer 13 and the anticorrosion layer 12 or between the anticorrosion layer 12 and the main body 11, the trapped water migrates along the interface and reaches the metal sheath of the cable which is joined to one end 111 of the main body 11 to cause corrosion to the metal sheath, or the water is likely to ingress into the joint box through a flange joint portion at the other end of the main body. According to the invention, therefore, it is critical that the anticorrosion layer 12 be in intimate contact with the layer 13 and with the main body 11 so as not to trap any water at the interfaces.

The anticorrosion layer 12 is made of a hydrophobic, water-impermeable material which can be made into a layer in intimate contact with the surface of the main body 11. Examples of useful materials are asphalt, unvulcanized natural or synthetic rubber, grease, petrolatum, natural or synthetic jelly-like material, wax, etc., which are used singly or in the form of a mixture of at least two of them. When such a material is used as softened by heating if so desired, the anticorrosion layer 12 can be formed in more intimate contact with the main body. A vulcanized or semi-vulcanized self-bonding rubber tape, such as those disclosed in Published Examined Japanese Patent Applications SHO 50—1890, SHO 52—25410, etc., is also usable for forming the anticorrosion layer 12 of the present invention since the tape can be held in intimate contact with the main body when wound therearound under tension.

For the anticorrosion layer 12 to be held satisfactorily in intimate contact with the opposed surfaces of the main body 11 and the protective layer 13 over a prolonged period of time, it is desired that the layer 12 be in intimate contact with these surfaces as adhered or bonded thereto.

When the joint box is subject to relatively great variations in temperature due to operation of the cable, variations in soil temperature, etc., it is preferable that the anticorrosion layer 12 to be held in intimate contact with both the main body 11 and the protective layer 13 be made of a material having suitable flexibility. The layer 12 will then expand or contract with the thermal expansions or contractions of the main body 11 and the protective layer 13 and can therefore be retained satisfactorily in intimate contact over a long period of time.

For the reasons given above, preferred materials for forming the anticorrosion layer 12 are those having tackiness, those which can be adhered when cured by reaction or those having flexibility over the range of varying temperatures mentioned above. Potting agents which become soft and elastic when cured by reaction, e.g., reaction-curable polyurethane, are some of the preferred materials for the anticorrosion layer 12.

Another example of preferred material having tackiness and/or flexibility for forming the anticorrosion layer is a mixture of asphalt and unvulcanized rubber, especially a mixture of 100 parts (by weight, the same as hereinafter) of asphalt and 5 to 50 parts of unvulcanized rubber. Examples of useful asphalts are blown asphalt, straight asphalt, etc. Examples of useful unvulcanized rubbers are natural rubber, ethylene-propylene copolymer rubber, ethylene-propylene-diene terpolymer rubber, butyl rubber, chloroprene rubber, acrylonitrile rubber, styrene-butadiene rubber, etc.

The anticorrosion layer 12 may be formed, for example, by directly coating the main body with one of the above-mentioned materials or winding a tape of the material around the main body. When it is difficult to wind the tape because the anticorrosion material has low mechanical strength, a tape is useful which includes a layer of woven or nonwoven fabric, paper or the like. For example, cheesecloth or cotton cloth topped with the above-mentioned mixture of asphalt and unvulcanized rubber on both sides is especially preferable because it is easy to wind and assures intimate contact. The thickness of the anticorrosion layer 12 is suitably about 0.5 to about 2 mm, so that the topped tape may be wound to such a thickness or preferably has such a thickness.

The anticorrosion layer 12 is protected by the overlying plastic protective layer 13 from an external force such as impact of soil or sand when the cable is buried. Accordingly the material for forming the protective layer 13 is not particularly limited insofar as it has mechanical strength sufficient for protecting the anticorrosion layer from the external force to be applied thereto during the burying work. Desirable materials are those at least 30, preferably at least 50, in Rockwell hardness (R scale) and 100 to 5000 kg/mm², preferably 200 to 3000 kg/mm² in tensile modulus of elasticity. Examples of useful materials are thermoplastic or thermosetting plastics reinforced with inorganic or organic fibers or with a woven or nonwoven fabric of such fibers. Examples of useful fibers are glass, carbon and phenolic resin fibers. Examples of useful plastics are nylon, polyolefin, epoxy resin, unsaturated polyester, etc.

It is suitable that the plastic protective layer be about 1 to about 5 mm in thickness. The layer is formed by applying the plastic material to the layer 12 by coating or tape winding, followed by heating for curing when required. When the plastics is epoxy resin, unsaturated polyester or like which is fluid when uncured, it is desirable to apply the plastics to the layer 12, wind a fiber tape around the coating of the plastics, repeating these steps several times, such as two to five times, to form the superposed coating layer and then after thermally curing the plastics in the superposed coating layer.

Usually a grounding terminal (not shown) is attached to the outer surface of the main body 11. Further when the joint box is used for OF cables, the main body is provided with an oil injection tube 113 which serves also for evacuation. The main body 11 has a flange at the other end. At the base portions of the grounding terminal and the oil injection tube 113, or at the base portion of the flange 112 or in the vicinity thereof, it is likely that the layers 12 and 13 will be formed incompletely, but this will pose no problem. These portions where the layers 12 and 13 are formed incompletely are of very small area as compared with the entire outer surface area of the main body 11, so that the same kind of material as the layer 12 can be applied to the incomplete portions in a built-up form for protection against corrosion, at a suitable time during the final step of forming a cable joint with use of the joint box of the invention. The built-up portions may preferably be covered with the same kind of material as the layer 13, but the covering can be dispensed with.

The end 111 of the joint box main body is airtightly joined to the metal sheath of the cable, preferably by soldering. In this case, to avoid the thermal deterioration and deformation of the anticorrosion layer 12 and the protective layer 13 due to the heat of soldering or to avoid the difficulty in soldering due to the flow of the materials of these layers, it is desirable that the layers 12 and 13 terminate at a position a small distance away from the end 111 as shown in Fig. 1 so that these layers will not be present at the end portion which is intensely heated for soldering the end 111. Further in order to protect the end portions of these layers 12 and 13 from the soldering heat, it is preferable to form a winding 14 of protective tape. Usable as the protective tape are various plastic tapes, rubber tapes and inorganic tapes other than those which soften or become fluid at low temperatures of up to 100°C. More specific examples of useful tapes are vinyl tape, Teflon (Trade Mark) tape, glass tape, asbestos tape, self-bonding crosslinked or semi-crosslinked rubber tapes disclosed in Published Examined Japanese Patent Applications SHO 50—1890, SHO 52—25410, etc.

When the end 111 of the main body is joined to the cable at a low temperature, for example, with use of an adhesive, it is of course desired that the anticorrosion layer 12 and the protective layer 13 terminate at the extremity of the end 111.

After the end 111 of the main body has been joined to the metal sheath, the same kind of material as the anticorrosion layer 12 is applied to the outer surface of the resulting joint to form an anticorrosion layer. Since the outer surface of the joint which must be covered with this anticorrosion layer has a small area, a satisfactory result can be obtained merely by applying the same kind of material as the layer 12 in a built-up form. It is especially desirable to wind the foregoing unvulcanized rubber tape or self-bonding crosslinked or semi-crosslinked tape with a lap.

Both the grounding terminal and the oil injection tube 113, which are liable to render the layers 12 and 13 incompletely formed at their base portions, are attached to the main body 11 preferably in the vicinity of the flange 112 or the end 111 of the main body, especially in the vicinity of the flange 112. In this case, the oil injection tube 113 which is closed by crimping after evacuation and injection of oil, the grounding terminal, and the flange 112 (or the outer surface and vicinity of the end 111) can be collectively treated against corrosion as by the method shown in Fig. 2 to be described or by winding a self-bonding tape, at a suitable time during the construction of the cable joint. These portions can then be protected against corrosion more easily and reliably than when they are so treated individually.

With reference to Fig. 2 and again to Fig. 1, one end 111 of each of a pair of joint box 1 and 1 is joined by solder 3 to the metal sheath 21 of the one of two OF cables 2 to be connected together, and the outer surface of the soldered joint is protected by a protective portion 4 made from the same kind of material as the layer 12, for example, by winding a self-bonding rubber tape in a built-up form. Preferably the protective portion is spread over an area sufficient to cover the protective layer 5 of the OF cable 2 and the end portion of the anticorrosion layer 12 and the plastic protective layer 13.

The joint boxes 1 and 1 are connected together by flanges 112 and 112 which are accommodated in a doughnut-shaped anticorrosion case 6 composed of two divided segments and mounted on trunk portions 114 of the joint boxes. The grounding terminals (not shown) and oil injection tubes 113 having their outer ends closed are also housed in the case 6. The interior of the anticorrosion case 6 is evacuated via a pipe 61 attached to the case and then filled with asphalt or like anticorrosion material 62. The pipe 61 is thereafter closed with ground wires (not shown) extending therethrough outward. The anticorrosion case 6 need not be so mounted as to render its interior airtight if the anticorrosion material can be filled in the interior without leaving any space therein and can be solidified by cooling, crosslinking or some other method. However, if there is a need to hold the interior airtight, seals 64 such as rubber packings or windings of self-bonding rubber tape are provided between the inner peripheries 63 of the case 6 and the outer surfaces of the trunk portions 114 of the joint boxes.

Examples of anticorrosion materials, other than asphalt, useful for filling the anticorrosion case are hydrophobic materials which are pourable at room temperature or elevated temperatures and which include water-impermeable synthetic or natural jelly used for jelly-filled cables, corrosion-resistant grease, polybutene and like consistent hydrocarbon oils, epoxy resin, polyurethane and like thermosetting liquids, silicone oil which is curable at room temperature, etc.

The present invention will be described below in greater detail with reference to examples.

### Example 1

A copper joint box main body was prepared which was shaped as shown in Fig. 1 (with the exception of absence of the tube 113) and which had a trunk portion 1 m in length and 40 cm in outside diameter, an outer end 15 cm in inside diameter and a wall thickness of 1 mm. An anticorrosion tape having a thickness of 1 mm and comprising 0.15-mm-thick cheesecloth which was topped on its opposite sides with a composition of 100 parts blown asphalt and 10 parts of styrene-butadiene copolymer rubber admixed with the asphalt was wound on the outer surface of the main body, in edge-to-edge abutting contact with itself. The wound layer of tape was heated at 120°C with application of small pressure from outside to fuse the abutting edges of the tape and form an anticorrosion layer. Subsequently a 0.5-mm-thick glass fiber fabric impregnated with uncured liquid epoxy resin was wound, in edge-to-edge abutting contact with itself, around the anticorrosion layer in three layers, and the three-layer winding was cured at room temperature (26°C) to form a plastic protective layer having an overall thickness of 4 mm.

### Example 2

A joint box of the same construction as in Example 1 was prepared except that the anticorrosion layer was made only of straight asphalt 1 mm in thickness and that the plastic protective layer was a 3-mm-thick layer of cured polyester incorporating glass fibers.

### Example 3

A joint box was prepared which had the same construction as in Example 1 except that the anticorrosion layer was made of bentonite-containing corrosion-resistant grease about 2 mm in thickness and that the plastic protective layer was prepared from an epoxy resin reinforced with glass fiber cloth and having three layers laminated in the same manner as in Example 1.

### Example 4

A joint box was prepared which had the same construction as in Example 1 except that a 1-mm-thick tape comprising a cotton tape topped on its opposite sides with a composition of 100 parts of blown asphalt and 20 parts of ethylene-propylene copolymer rubber was wound with a 1/4 lap around the main body to form an anticorrosion layer, which was covered with a plastic protective layer formed in the same manner as in Example 1.

Two aluminum pipes, 15 cm in outside diameter, 2 mm in wall thickness and 0.5 m in length, were used as simulated cables in order to evaluate the performance of a pair of joint boxes of the type prepared in each of the foregoing examples. The forward (outer) ends of the joint boxes were soldered to the outer surfaces of the aluminum pipes with an aluminum solder, whereby the two aluminum pipes were connected together in the same manner as shown in Fig. 2.

Next, an aluminum cap having a lead pipe of 10 mm in diameter attached on its top was fitted over the outer end of each aluminum pipe and soldered thereto with an aluminum solder. For protection against corrosion, a self-bonding cured butyl rubber tape was wound to a thickness of 10 mm around all the metal exposed portions of the resulting assembly, i.e., the lead pipes, caps, aluminum pipes and flange joint portion.

The simulated cable joint thus obtained was placed into a cavity, 1 m in width, 2 m in depth and about 6 m in length, excavated in the ground and then buried by being covered with soil and sand, with the outer ends of the two lead pipes positioned above the ground. With the soil and sand incessantly held wet with sufficient water, oil having a temperature of 70°C was passed through the joint boxes via the lead pipes for 8 hours daily for simulating the operation of the joint boxes.

After the lapse of 6 months, the joint boxes were recovered from the ground, the plastic protective layer was broken and the anticorrosion layer was washed away to check the metal portions for changes. None of the metal portions of all the joints tested were found to have a fault such as color change or corrosion.

## Claims

1. A joint box for directly buried cables, comprising a main body of metal (11), an intermediate anticorrosion layer (12) and a plastic protective layer (13), said anticorrosion layer being in intimate contact with the main body and the plastic protective layer, as adhered or bonded thereto, so as not to trap any water in the interfaces, characterized in that said anticorrosion layer (12) is made of a hydrophobic, water-impervious material selected from the group consisting of asphalt, unvulcanized natural or synthetic rubber, grease, petrolatum, water-impervious jelly like materials of the type usually used for water impervious cables, wax or a mixture of at least two of these, or a vulcanised or semi-vulcanised self-bonding rubber tape.

2. A joint box as defined in claim 1 wherein the anticorrosion layer is made of a tacky and flexible material.

3. A joint box as defined in claim 1 wherein the plastic protective layer is made of a crosslinked or cured plastics reinforced with a fiber material incorporated therein.

4. A joint for directly buried electric cables characterized in that the joint comprises a pair of joint boxes (1) as defined in claim 1 each having an anticorrosion layer (12) on its outer surface and a plastic protective layer (13) over the anticorrosion layer, the outer end (111) of each of the joint boxes being soldered to the metal sheath (21) of an electric cable (2) and protected against corrosion by a protective layer (4) made of an anticorrosion material and formed over the soldered joint, the joint boxes being connected to each other by a flange joint (112) accommodated in an anticorrosion case (6) provided on trunk portions (114) of the joint boxes, the remaining interior space of the anticorrosion case being filled with an anticorrosion material.

## Patentansprüche

1. Verbindungsgehäuse für direkt verlegte Kabeln, mit einem Hauptkörper (11) aus Metall, einer Antikorrosions-Zwischenschicht (12) und einer Kunststoff-Schutzschicht (13), wobei sich die Antikorrosionsschicht in innigem Kontakt mit dem Hauptkörper und der Kunststoff-Schutzschicht befindet, wie daran haftend oder gebunden ist, sodaß sich kein Wasser in den Übergangsflächen fangen kann, dadurch gekennzeichnet, daß die Antikorrosionsschicht (12) aus einem hydrophoben, wasserundurchlässigen Material, ausgewählt aus der Gruppe bestehend aus Asphalt, nichtvulkanisiertem natürlichem oder synthetischem Gummi, Fett, Petrolatum, wasserundurchlässigem Gelee, wie Materialien der Art, wie sie für wasserundurchlässige Kabeln üblicherweise verwendet werden, Wachs oder einer Mischung aus mindestens zwei von diesen, oder einem vulkanisierten oder halbvulkanisierten selbstbindenden Gummiband, hergestellt ist.

2. Verbindungsgehäuse nach Anspruch 1, wobei die Antikorrosionsschicht aus einem klebrigen und nachgiebigem Material hergestellt ist.

3. Verbindungsgehäuse nach Anspruch 1, bei welchem die Kunststoff-Schutzschicht aus einem quervernetzten oder gehärteten, mit darin eingearbeitetem Fasermaterial verstärkten Kunststoff hergestellt ist.

4. Verbindung für direkt verlegte elektrische Kabeln, dadurch gekennzeichnet, daß die Verbindung ein Paar Verbindungsgehäuse (1) nach Anspruch 1 umfaßt, von denen jedes eine Antikorrosionsschicht (12) an seiner Außenfläche und eine Kunststoff-Schutzschicht (13) über der Antikorrosionsschicht aufweist, wobei das äußere Ende (111) jedes der Verbindungsgehäuse an der Metallhülle (21) eines elektrischen Kabels (2) angelötet und durch eine Schutzschicht (4) aus korrosionsverhütendem Material, die über der Lötverbindung gebildet ist, gegen Korrosion geschützt ist, wobei die Verbindungsgehäuse durch eine Flanschverbindung (112), die in einem auf Hauptabschnitten (114) der Verbindungsgehäuse vorgesehenen Antikorrosionskasten (6) untergebracht ist, miteinander verbunden sind, wobei der verbleibende Innenraum des Antikorrosionskastens mit einem korrosionsverhütenden Material gefüllt ist.

**Revendications**

1. Une boîte de jonction pour câbles directement enterrés, comprenant un corps principal en métal (11), une couche anticorrosion intermédiaire (12) et une couche plastique de protection (13), cette couche anticorrosion étant en contact intime avec le corps principal et la couche plastique de protection, auxquels elle adhère ou est liée, par exemple, de façon à ne pas emprisonner de l'eau dans les interfaces, caractérisée en ce que ladite couche anticorrosion (12) est constituée d'un matériau hydrophobe, imperméable à l'eau, choisi dans le groupe comprenant l'asphalte, le caoutchouc naturel ou synthétique non vulcanisé, la graisse, la vaseline, les gels imperméables à l'eau du type usuellement utilisé pour les câbles imperméables à l'eau, la cire, ou un mélange d'au moins deux de ces matériaux, ou un ruban auto-adhésif de caoutchouc vulcanisé ou semi-vulcanisé.

2. Boîte de jonction selon la revendication 1, caractérisée en ce que la couche anticorrosion est constituée d'un matériau flexible et collant.

3. Boîte de jonction selon la revendication 1, caractérisée en ce que la couche plastique de protection est constituée d'une matière plastique réticulée ou durcie, renforcée par un matériau fibreux incorporé dans ladite matière.

4. Un joint pour câbles électriques directement enterrés, caractérisé en ce que ce joint comprend une paire de boîtes de jonction (1) selon la revendication 1, ayant chacune une couche anticorrosion (12) sur sa surface externe et une couche plastique de protection (13) par dessus la couche anticorrosion, l'extrémité extérieure (111) de chacune des boîtes de jonction étant soudée à la gaîne métallique (21) d'un câble électrique (2) et protégée vis-à-vis de la corrosion par une couche de protection (4) en un matériau anticorrosion et formée par dessus le joint soudé, les boîtes de jonction étant raccordées l'une à l'autre par un joint à brides (112) logé dans une enceinte anticorrosion (6) prévue sur les portions du tronc (114) des boîtes de jonction, le restant de l'espace intérieur de l'enceinte anticorrosion étant rempli d'un matériau anticorrosion.

Fig. 1

Fig. 2